# EUROPÄISCHE PATENTSCHRIFT

(11) **EP 1 012 555 B1**
(45) Veröffentlichungstag und Bekanntmachung des Hinweises auf die Patenterteilung: **14.08.2002**
(21) Anmeldenummer: 98910617.4
(22) Anmeldetag: 12.02.1998
(51) Int. Cl.: G01L 15/00, G01D 21/02, G01D 11/24

(54) **Drucksensor**
Pressure sensor
Capteur de pression

(30) Priorität: 19.03.1997 DE 19711366
(43) Veröffentlichungstag der Anmeldung: 28.06.2000
(73) Patentinhaber: ROBERT BOSCH GMBH, 70442 Stuttgart (DE)
(72) Erfinder: KAISER, Harry, D-71706 Markgröningen (DE)
(86) Internationale Anmeldenummer: DE9800391
(87) Internationale Veröffentlichungsnummer: WO9841831

(56) Entgegenhaltungen:
- DE-A- 19 521 832
- US-A- 3 930 412
- US-A- 4 442 716

## Beschreibung

### Stand der Technik

Die Erfindung geht von einer Meßvorrichtung entsprechend der Gattung des Anspruchs 1 aus. Derartige Meßvorrichtungen werden beispielsweise in Bremssystemen von Kraftfahrzeugen eingesetzt, die elektrohydraulisch betätigt bzw. geregelt werden. Bekannte Anwendungsfälle sind Bremssysteme mit Blokkierschutz oder Bremssysteme ohne mechanische Kopplung zwischen dem Bremsbetätigungspedal und dem Hauptbremszylinder.

Die Hauptkenngrößen zur Regelung dieser elektrohydraulischen Bremssysteme bilden die in den Bremskreisen auftretenden Betriebsdrücke. Diese lassen sich von Drucksensoren erfassen, in elektrische Signale umwandeln und in einem Steuergerät zusammen mit anderen Sensorsignalen zu Ansteuersignalen für das Bremsaggregat weiterverarbeiten. Hierzu ist eine relativ große Anzahl von Einzelteilen erforderlich, die separat zu befestigen und über hydraulische oder elektrische Leitungen zu verbinden sind. Bei der hydraulischen Leitungsführung ist insbesondere eine mögliche Ausbildung von Luftpolstern in den Meßkreisen zu vermeiden, weil derartige Luftpolster Fehlmessungen hervorrufen und im Extremfall zu Fehlfunktionen des Bremssystems führen können. Eine Ausbildung von Luftpolstern wird besonders bei der Verwendung von konventionellen, preisgünstigen Drucksensoren mit topfförmig ausgebildeten Meßzellen begünstigt.

Aus der Druckschrift DE 195 21 832 A1 ist eine Druckmeßvorrichtung bekannt, die zur Erfassung und zur Auswertung von Drücken an verschiedenen Druckmeßstellen mit einer Vielzahl von Drucksensoren mit topfförmigen Meßzellen bestückt ist. Diese Meßzellen sind in einer gemeinsamen Trägerplatte ausgebildet, ohne jedoch Buchsen aufzuweisen, die den Innenraum der Meßzellen auf ein zur Bildung von Luftpolstern unkritisches Volumen verkleinern.

Meßvorrichtungen zur Druckerfassung an Meßstellen mit Hilfe von gattungsgemäßen Drucksensoren sind auch aus den Druckschriften US 3,930,412 und US 4,442,716 bekannt, ohne jedoch die Problematik von Luftpolstern in Hydraulikkreisen bzw. konstruktive Abhilfemaßnahmen hierfür aufzuzeigen.

Ausgehend von der DE 195 21 832 A1, als nächstliegendem Stand der Technik, besteht die der Erfindung zugrunde liegende Aufgabe darin, bei einem Drucksensor nicht durchströmte Bereiche im Innenraum der Meßzelle zu vermeiden. Diese Aufgabe wird von einem Drucksensor mit den Merkmalen des Anspruchs 1 gelöst.

### Vorteile der Erfindung

Ein Drucksensor mit den kennzeichnenden Merkmalen des Anspruchs 1 weist den Vorteil auf, daß die aufgrund der topfförmigen Ausbildung der Drucksensoren bedingten Hohlkammern auf ein Minimum reduziert sind, wodurch nicht durchströmte Bereiche der Drucksensoren weitgehend vermieden werden. Zudem läßt sich die hydraulische Leitungsführung von bzw. zu den Drucksensoren verhältnismäßig kurz und direkt ausbilden. Darüber hinaus lassen sich mit Hilfe einer kostengünstigen Konsole mehrere Drucksensoren kompakt zusammenfassen. Diese Konsole schützt zudem die Drucksensoren vor mechanischen und thermischen Belastungen, ist im Servicefall leicht zugänglich und ist mit Standardwerkzeug austauschbar. Zudem lassen sich an der Konsole Schaltungsträger anordnen, so daß elektrische Leitungen von den Drucksensoren zu diesen Schaltungsträgern möglichst kurz ausbildbar sind.

Weitere Vorteile oder vorteilhafte Weiterbildungen der Erfindung ergeben sich aus den abhängigen Ansprüchen oder der Beschreibung.

### Zeichnung

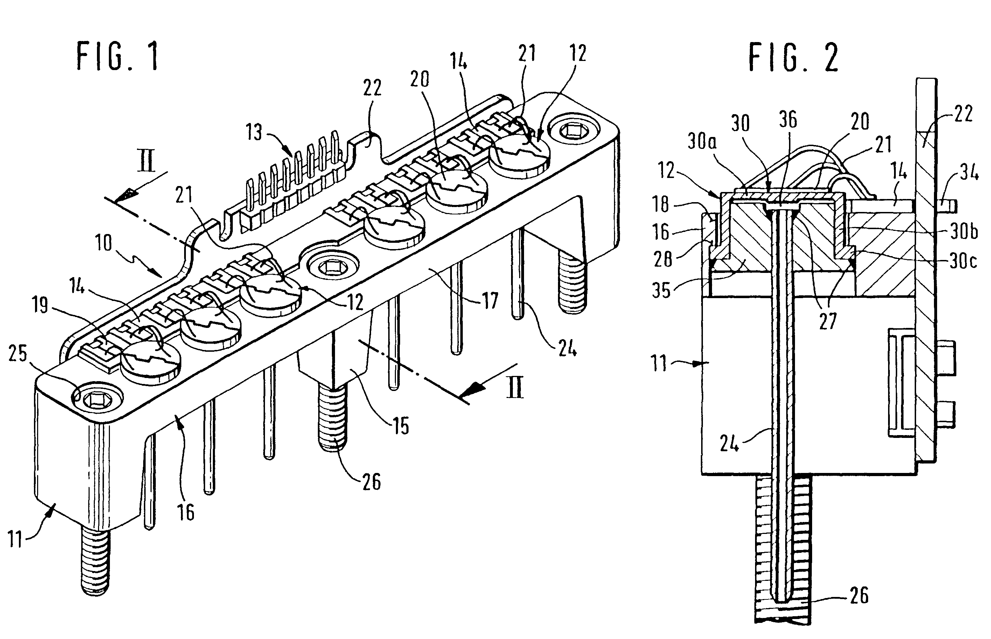

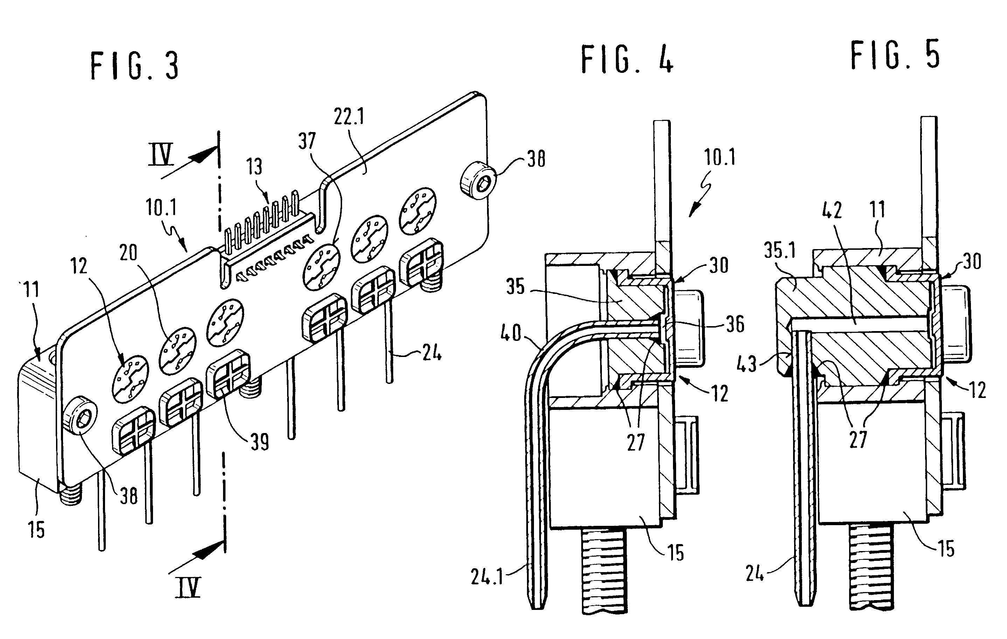

Ausführungsbeispiele der Erfindung sind in der Zeichnung dargestellt und in der nachfolgenden Beschreibung näher erläutert. Figur 1 zeigt eine Meßeinrichtung in perspektivischer Ansicht, bei der mehrere erfindungsgemäße Drucksensoren in einer Konsole angeordnet sind. In Figur 2 ist einer dieser Drucksensoren nach Figur 1 im Querschnitt entlang der Schnittlinie II-II nach Figur 1 dargestellt. Figur 3 zeigt die Meßvorrichtung in perspektivischer Ansicht von der Rückseite; die Figuren 4 und 5 stellen Querschnitte entlang der Schnittlinie IV-IV nach Figur 3 durch die Drucksensoren dar, um verschiedene Möglichkeiten zur Führung des Meßrohrs zu den Drucksensoren zu offenbaren.

### Beschreibung der Ausführungsbeispiele

Figur 1 zeigt eine Meßeinrichtung 10, die im wesentlichen aus einer Konsole 11, aus beispielhaft sechs an der Konsole 11 angeordneten Drucksensoren 12 und aus jeweils einem den Drucksensoren 12 zugeordneten Schaltungsträger 14 besteht. Die Konsole 11 ist brückenartig ausgebildet und weist im Ausführungsbeispiel insgesamt drei Auflagestützen 15 auf, die durch eine Quertraverse 16 miteinander verbunden sind. Die Auflagestützen 15 unterteilen die Quertraversen 16 in zwei Traversenabschnitte 17. Im Bereich eines Traversenabschnitts 17 sind exemplarisch jeweils drei Ausnehmungen 18 (Figur 2) ausgebildet, in die die Drucksensoren 12 eingesetzt sind. Die Drucksensoren 12 sind dabei parallel zur Ausdehnungsrichtung der Auflagestützen 15 angeordnet. An ihren aus der Quertraverse 16 herausragenden Enden weisen die Drucksensoren 12 zur Meßwerterfassung jeweils eine Widerstandsbrückenschaltung 20 auf, die durch Kontaktierungsleitungen 21 mit den seitlich zu den Drucksensoren 12 auf der Konsole 11 positionierten Schaltungsträgern 14 verbunden ist, die die Meßwerte weiterverarbeiten. Die Leiterbahnen 19 der Schaltungsträger 14 setzen sich auf einer rechtwinklig zu den Schaltungsträgern 14 an der Konsole 11 befestigten Leiterplatte 22 fort. Diese Leiterplatte 22 weist zur Weiterleitung der Meßergebnisse an eine externe, nicht dargestellte Steuerelektronik eine Steckeranordnung 13 auf. Zur Messung von Drücken an verschiedenen Meßstellen eines Bremssystems sind die Drucksensoren 12 über Meßrohre 24 mit den entsprechenden Druckmeßstellen gekoppelt. Die in Figur 1 nur abschnittsweise erkennbaren Meßrohre 24 sind demnach mit Druckmedium, das unter dem zu erfassenden Druckniveau steht, befüllt und münden gegenüberliegend zu den aus der Quertraverse 16 herausragenden Enden der Drucksensoren 12 in diese ein (Figur 2).
Figur 1 zeigt ferner, daß die Konsole 11 im Bereich ihrer Auflagestützen 15 Durchgangsbohrungen 25 hat. Diese Durchgangsbohrungen 25 nehmen Befestigungselemente 26 - im Ausführungsbeispiel Schrauben - auf, über die die Meßeinrichtung 10 vorzugsweise an einem nicht dargestellten elektrohydraulisch regelbaren Hydraulikblock eines Bremsaggregats befestigbar ist.

Aus dem in Figur 2 dargestellten Querschnitt der Meßeinrichtung 10 geht hervor, daß die durchgehenden Ausnehmungen 18 der Quertraverse 16 in ihrem Innendurchmesser einmal abgesetzt sind. Der kleinere Innendurchmesser ist dabei auf der von den Auflagestützen 15 (Figur 1) abgewandt liegenden Seite der Konsole 11 angeordnet. Der Übergang vom kleineren zum größeren Innendurchmesser ist rechtwinklig ausgebildet, so daß sich eine umlaufende Anlageschulter 28 ergibt. An der Anlageschulter 28 liegt ein als Massenware erhältlicher Drucksensor 12 an, der aus einer Meßzelle 30 und einer daran angebrachten Widerstandsbrückenschaltung 20 besteht. Die Meßzelle 30 des Drucksensors 12 ist unter anderem aus Stabilitätsgründen hutförmig ausgebildet und gliedert sich dementsprechend in eine Deckelplatte 30a, eine Wandung 30b und einen mit der Anlageschulter 28 der Ausnehmung 18 zusammenwirkenden Bund 30c. Die Widerstandsbrückenschaltung 20 ist auf der Außenseite der aus der Ausnehmung 18 herausragenden Deckelplatte 30c der Meßzelle 30 befestigt und durch Kontaktierungsleitungen 21 mit einem seitlich auf der Konsole 11 angebrachten Schaltungsträger 14, der die Meßergebnisse weiterverarbeitet, elektrisch gekoppelt. Die Schaltungsträger 14 haben an ihrer der Leiterplatte 22 zugewandten Umfangsseite ausgebildete Kontaktstifte 34, die durch nicht dargestellte Steckerbohrungen in der rechtwinklig zu den Schaltungsträgern 14 an der Konsole 11 befestigten Leiterplatte 22 hindurchragen und mit dieser leitend verbunden sind.

Figur 2 zeigt desweiteren, daß der Innenbereich der Meßzelle 30 von einer Buchse 35 bis auf einen schmalen, sich parallel zur Deckelplatte 30a erstreckenden Meßspalt 36 ausgefüllt ist. Die Buchse 35 hat eine ebenfalls hutförmige Außenkontur, ist maßlich auf den Innendurchmesser der Meßzelle 30 abgestimmt und wird entlang ihrer Längsachse von einem geradlinig ausgebildeten Meßrohr 24 durchdrungen. Das erste Ende dieses Meßrohrs 24 mündet in den Meßspalt 36, während das nicht dargestellte gegenüberliegende zweite Ende an einer Druckmeßstelle eines Hydraulikkreises endet. Die Buchse 35 hat u.a. die Funktion, den Meßspalt 36 zur Umgebung hin abzudichten. Hierzu weist die Buchse 35 mit der Meßzelle 30 und auch mit dem Meßrohr 24 eine luftdichte Verbindung 27 auf. Diese Verbindung 27 kann beispielsweise als Lötung oder als Schweißung, insbesondere als Laserschweißung, ausgebildet sein. Auf diese Weise ist sichergestellt, daß das Druckniveau im Meßspalt 26 mit dem der Druckmeßstelle identisch ist und zuverlässig gemessen werden kann. Aufgrund der durch die Buchse 35 auf ein unerlässliches Minium reduzierten Größe des Meßspalts 36 ist zudem gewährleistet, daß sich im Meßspalt 36 keine größeren, eventuell in den zu vermessenden Hydraulikkreisen bzw. in den Meßrohren 24 vorhandenen Restluftanteile ansammeln können, die die Druckmessung verfälschen könnten.

In Figur 3 ist als zweites Ausführungsbeispiel eine Meßeinrichtung 10.1. dargestellt, die im wesentlichen aus den selben Einzelteilen besteht, wie die oben beschriebene Meßeinrichtung 10. Identische Bauteile sind daher im folgenden mit den gleichen Bezugsziffern versehen, während konstruktiv veränderte Bauteile durch um den Index 1 ergänzte Bezugsziffern gekennzeichnet sind. Im Gegensatz zur Meßeinrichtung 10 weist die Meßeinrichtung 10.1 rechtwinklig zur Ausdehnungsrichtung der Auflagestützen 15 (Figur 1) angeordnete Drucksensoren 12 auf. Die Drucksensoren 12 ragen dabei mit ihren die Widerstandsbrückenschaltung 20 aufweisenden Enden durch entsprechende Bohrungen 37 in einer Leiterplatte 22.1 hindurch. Die Leiterplatte 22.1 ist mit Hilfe von Schraubverbindungen 38 an der Konsole 11.1 befestigt. Vorteilhafterweise lassen sich die Drucksensoren 12 dadurch direkt mit der Leiterplatte 22.1 kontaktieren. Auf der Leiterplatte 22.1 sind neben der Steckeranordnung 13 auch die Auswerteschaltungen für die Widerstandsbrückenschaltungen 20 in Form von integrierten Schaltkreisen 39 plaziert. Die Meßeinrichtung 10.1 zeichnet sich demnach durch eine deutlich geringere Anzahl von Einzelteilen aus, da die im ersten Ausführungsbeispiel notwendigen Schaltungsträger 14 und deren Kontaktierungsleitungen 21 ersatzlos entfallen können. Dadurch verringert sich der Montageaufwand für die Meßeinrichtung 10.1 bei einer gleichzeitigen Steigerung ihrer Zuverlässigkeit. Geringfügig unterschiedlich stellt sich bei der Meßeinrichtung 10.1 auch die Ausbildung der Meßrohre 24 dar. Zwei diesbezüglich verhältnismäßig kostengünstig realisierbare Lösungen sind in den Figuren 4 und 5 gezeigt.

Gemäß Figur 4 ist in der Meßzelle 30 des rechtwinklig zu den Auflagestützen 15 angeordneten Drucksensors 12 eine identisch zum ersten Ausführungsbeispiel ausgebildete Buchse 35 eingesetzt und über eine luftdichte Verbindung 27 fixiert. Das zunächst parallel zu den Auflagestützen 15 geführte Meßrohr 24.1 weist aufgrund der geänderten Lage des Drucksensors 12 vor seiner Einmündung in die Buchse 35 eine Biegung 40 auf. Sollte eine derartige Biegung 40 des Meßrohrs 24.1 für manchen Anwendungsfälle aus Stabilitätsoder aus Kostengründen unerwünscht sein, so ist in Figur 5 eine diesbezüglich verbesserte Lösungsvariante dargestellt.

Gemäß Figur 5 wird vorgeschlagen, anstatt des Meßrohrs 24.1 die in die Meßzelle 30 eingesetzte Buchse 35.1 an die geänderte Lage des Drucksensors 12 anzupassen. Dazu ist diese Buchse 35.1 so weit verlängert, daß ihr von der Meßzelle 30 des Drucksensors 12 abgewandt liegendes Ende über die Konsole 11 hinausragt. In der Buchse 35.1 ist eine Sacklochbohrung 42 ausgebildet, die sich von ihrer in den Meßspalt 26 mündenden Öffnung bis in den Bereich des über die Konsole 11 hinausragenden Endes der Buchse 35.1 erstreckt. Im überstehenden Bereich der Buchse 35.1 befindet sich eine Radialbohrung 43, die die Sacklochbohrung 42 nach außen weiterführt. In diese Radialbohrung 43 ist das Meßrohr 24 über die luftdichte Verbindung 27 fixiert. Dieses Meßrohr 24 kann somit trotz einer zu den Auflagestützen 15 rechtwinklig versetzten Lage der Drucksensoren 12 nach wie vor parallel zu den Auflagestützen 15 geführt und dabei geradlinig ausgebildet sein.

Selbstverständlich sind Änderungen oder Ergänzungen an den beschriebenen Ausführungsbeispielen von Drucksensoren 12 möglich, ohne vom Wortlaut der Patentansprüche abzuweichen. So ist es beispielsweise denkbar derartige Drucksensoren 12 auch für Meßaufgaben außerhalb der Kfz-Technik einzusetzen.

## Patentansprüche

1. Drucksensor (12), bestehend aus einer topfförmigen Meßzelle (30) mit einer Deckelplatte (30a), an der eine Meßwerterfassungsschaltung (20) angeordnet ist und einer die Deckelplatte (30a) tragenden, den Innenraum der Meßzelle (30) seitlich begrenzenden Wandung (30b), **dadurch gekennzeichnet, daß** in dem Innenraum der Meßzelle (30) eine Buchse (35) eingesetzt ist, die das Volumen dieses Innenraums mit Ausnahme eines Meßspalts (36) und einer in den Meßspalt (36) einmündenden Druckzuführung vollständig ausfüllt.

2. Drucksensor nach Anspruch 1, **dadurch gekennzeichnet, daß** die Buchse (35) mit der Meßzelle (30) des Drucksensors (12) eine luftdichte Verbindung (27) aufweist.

3. Drucksensor nach einem der Ansprüche 1 oder 2, **dadurch gekennzeichnet, daß** die Druckzuführung wenigstens abschnittsweise ein Meßrohr (24) aufnimmt und daß das Meßrohr (24) mit der Buchse (35) eine luftdichte Verbindung (27) aufweist.

4. Drucksensor nach einem der Ansprüche 2 oder 3, **dadurch gekennzeichnet, daß** die luftdichte Verbindung (27) zwischen der Buchse (35) und der Meßzelle (30) bzw. zwischen der Buchse (35) und dem Meßrohr (24) eine Schweißverbindung, insbesondere eine Laserschweißverbindung, ist.

5. Drucksensor nach einem der Ansprüche 2 oder 3, **dadurch gekennzeichnet, daß** die luftdichte Verbindung (27) zwischen der Buchse (35) und der Meßzelle (30) bzw. zwischen dem Meßrohr (24) und der Buchse (35) eine Lötverbindung ist.

6. Drucksensor nach einem der Ansprüche 3 bis 5, **dadurch gekennzeichnet, daß** die Meßzelle (30) in Richtung der Längsachse des Meßrohrs (24) oder rechtwinklig zu dieser Längsachse versetzt angeordnet ist.

7. Drucksensor nach einem der Ansprüche 1 bis 6, **dadurch gekennzeichnet, daß** wenigstens ein Drucksensor (12) und wenigstens ein Schaltungsträger (14) mit Hilfe einer Konsole (11) zu einer Meßvorrichtung (10) zusammengefaßt sind.

8. Drucksensor nach Anspruch 7, **dadurch gekennzeichnet, daß** die Konsole (11) brückenförmig ausgebildet ist und wenigstens zwei Auflagestützen (15) aufweist und daß der wenigstens eine Schaltungsträger (14) an einer der Längsseiten der Konsole (11) befestigt ist.

9. Drucksensor nach einem der Ansprüche 7 oder 8, **dadurch gekennzeichnet, daß** die Meßrohre (24) der Drucksensoren (12) zumindest abschnittsweise parallel zur Ausdehungsrichtung der Auflagestützen (15) der Konsole (11) verlaufen.

10. Hydraulikblock zur Steuerung eines elektrohydraulischen Bremsaggregats mit wenigstens einem Drucksensor (12) nach einem der Ansprüche 1 bis 9.

## Claims

1. Pressure sensor (12), comprising a cup-shaped measuring cell (30) having a covering plate (30a), on which a measured-value sensing circuit (20) is arranged, and a wall (30b) which supports the covering plate (30a) and laterally bounds the interior of the measuring cell (30), **characterized in that** a bushing (35) is inserted into the interior of the measuring cell (30), the said bushing completely filling the volume of this interior, apart from a measuring gap (36) and a pressure feed leading into the measuring gap (36).

2. Pressure sensor according to Claim 1, **characterized in that** the bushing (35) has an air-tight connection (27) to the measuring cell (30) of the pressure sensor (12).

3. Pressure sensor according to either of Claims 1 and 2, **characterized in that** the pressure feed accommodates a measuring tube (24) at least in some sections, and **in that** the measuring tube (24) has an air-tight connection (27) to the bushing (35).

4. Pressure sensor according to either of Claims 2 and 3, **characterized in that** the air-tight connection (27) between the bushing (35) and the measuring cell (30) and between the bushing (35) and the measuring tube (24) is a welding connection, in particular a laser welding connection.

5. Pressure sensor according to either of Claims 2 and 3, **characterized in that** the air-tight connection (27) between the bushing (35) and the measuring cell (30) and between the measuring tube (24) and the bushing (35) is a soldering connection.

6. Pressure sensor according to one of Claims 3 to 5, **characterized in that** the measuring cell (30) is arranged in the direction of the longitudinal axis of the measuring tube (24) or offset at right angles with respect to this longitudinal axis.

7. Pressure sensor according to one of Claims 1 to 6, **characterized in that** at least one pressure sensor (12) and at least one circuit carrier (14) are combined with the aid of a console (11) to form a measuring apparatus (10).

8. Pressure sensor according to Claim 7, **characterized in that** the console (11) is of bridge-shaped design and has at least two bearing supports (15), and **in that** at least one circuit carrier (14) is fastened on one of the longitudinal sides of the console (11).

9. Pressure sensor according to either of Claims 7 and 8, **characterized in that** the measuring tubes (24) of the pressure sensors (12) run at least in some sections parallel to the direction of extent of the bearing supports (15) of the console (11).

10. Hydraulic block for controlling an electrohydraulic brake unit having at least one pressure sensor (12) according to one of Claims 1 to 9.

## Revendications

1. Capteur de pression (12) composé d'une cellule de mesure (30) en forme de pot munie d'une plaque de recouvrement (30a) équipée d'un circuit de saisie de valeur de mesure (20), et d'une paroi (30b) portant la plaque de recouvrement (30a) et délimitant latéralement le volume intérieur de la cellule de mesure (30),
**caractérisé en ce qu'**
un manchon (35) est placé dans le volume intérieur de la cellule de mesure (30) pour remplir complètement le volume intérieur de la cellule de mesure à l'exception d'un intervalle de mesure (36) et d'un passage de pression débouchant dans l'intervalle de mesure (36).

2. Capteur de pression selon la revendication 1,
**caractérisé en ce que**
le manchon (35) est relié par une liaison (27) étanche à l'air à la cellule de mesure (30) du capteur de pression (12).

3. Capteur de pression l'une des revendications 1 ou 2,
**caractérisé en ce que**
le passage de la pression reçoit au moins par segments un tube de mesure (24) et ce tube de mesure (24) est relié par une liaison étanche à l'air (27) au manchon (35).

4. Capteur de pression selon l'une des revendications 2 ou 3,
**caractérisé en ce que**
la liaison étanche à l'air (27) entre le manchon (35) et la cellule de mesure (30) ou entre le manchon (35) et le tube de mesure (24) est réalisée par une soudure, notamment une soudure par laser.

5. Capteur de pression selon l'une des revendications 2 ou 3,
**caractérisé en ce que**
la liaison étanche à l'air (27) entre le manchon (35) et la cellule de mesure (30) ou entre le tube de mesure (24) et le manchon (35) est une brasure.

6. Capteur de pression selon l'une quelconque des revendications 3 à 5,
**caractérisé en ce que**
la cellule de mesure (30) est décalée dans la direction de l'axe longitudinal du tube de mesure (24) ou à l'équerre par rapport à cet axe longitudinal.

7. Capteur de pression selon l'une quelconque des revendications 1 à 6,
**caractérisé en ce qu'**
au moins un capteur de pression (12) et au moins un support de circuit (14) sont réunis à l'aide d'une console (11) pour former un dispositif de mesure (10).

8. Capteur de pression selon la revendication 7,
**caractérisé en ce que**
la console (11) a une forme de pont et comporte au moins deux supports d'appui (15), et au moins un support de circuit (14) est fixé à l'un des grands côtés de la console (11).

9. Capteur de pression selon l'une des revendications 7 ou 8,
**caractérisé en ce que**
les tubes de mesure (24) des capteurs de pression (12) sont au moins par segments, parallèles à la direction d'extension des supports d'appui (15) de la console (11).

10. Bloc hydraulique pour commander une unité de freinage électrohydraulique comportant au moins un capteur de pression (12) selon l'une quelconque des revendications 1 à 9.
